**Europäisches Patentamt**

**European Patent Office**

**Office européen des brevets**

(19)

(11) Veröffentlichungsnummer: **0 086 019 B2**

(12)

# NEUE EUROPÄISCHE PATENTSCHRIFT

(45) Veröffentlichungstag der neuen Patentschrift: **29.11.89**

(51) Int. Cl.⁴: **C 02 F 1/78**

(21) Anmeldenummer: **83200163.0**

(22) Anmeldetag: **28.01.83**

(54) **Vorrichtung zur Begasung einer Flüssigkeit und Verfahren zum Betrieb der Vorrichtung.**

(30) Priorität: **09.02.82 CH 780/82**

(43) Veröffentlichungstag der Anmeldung:
**17.08.83 Patentblatt 83/33**

(45) Bekanntmachung des Hinweises auf die Patenterteilung:
**23.04.86 Patentblatt 86/17**

(45) Bekanntmachung des Hinweises auf die Entscheidung über den Einspruch:
**29.11.89 Patentblatt 89/48**

(84) Benannte Vertragsstaaten:
**CH DE GB LI**

(56) Entgegenhaltungen:
**DE-A- 2 507 698**
**DE-C- 148 193**
**FR-A- 642 874**
**FR-A- 1 062 139**
**FR-A- 1 196 744**
**US-A- 3 945 918**

(73) Patentinhaber: **BBC Brown Boveri AG, Haselstrasse, CH-5401 Baden (CH)**

(72) Erfinder: **Wiesmann, Rudolf, Tulpenstrasse 6, CH-9202 Gossau (CH)**

EP 0 086 019 B2

## Beschreibung

Die Erfindung bezieht sich auf eine Vorrichtung zur Begasung einer Flüssigkeit mit Ozon oder einem ozonhaltigen Gas gemäss dem Gattungsbegriff des Patentanspruchs 1 sowie auf ein Verfahren zum Betrieb dieser Vorrichtung.

Mit diesem Gattungsbegriff nimmt die Erfindung Bezug auf einen Stand der Technik, wie er sich beispielsweise aus der FR-A 642 874 ergibt.

Bei der Durchführung von verfahrenstechnischen Prozessen ist es oft notwendig, zwecks Stoffaustausch eine Flüssigkeit mit einem Gas, dem Prozessgas, in Kontakt zu bringen. Die dabei auftretenden Bedingungen sind sehr mannigfaltig. Dementsprechend zahlreich sind auch die möglichen Ausführungsvarianten. Generell werden dabei an die Begasungsvorrichtungen folgende Anforderungen gestellt:

- hoher Absorptionswirkungsgrad
- Betriebssicherheit
- geringe hydraulische Höhe
- kleines Bauvolumen
- niedrige Investitionskosten
- niedrige Betriebskosten
- variierbarer Durchsatz ohne nennenswerte Wirkungsgradeinbusse

Bei der Begasung von Flüssigkeit wird das Gas mit Hilfe eines geeigneten Apparates in kleine Blasen zerteilt und anschliessend in einer Reaktorstrecke, der Blasensäule in der Flüssigkeit gelöst. Die benötigte Verweilzeit in der Reaktorstrecke hängt hauptsächlich von dem maximalen Anfangsblasenradius und der Auflösungsgeschwindigkeit ab. In der Praxis wird an den Gaszerteilungsapparat die Anforderung gestellt, dass der maximale Blasenradius eine bestimmte (sehr kleine) Grösse nicht überschreitet. Ansonsten wird die benötigte Verweilzeit und die Reaktorstrecke sehr lang, das Verfahren unwirtschaftlich. Dies gilt insbesondere für Verfahren, wo eine Flüssigkeit mit Ozon oder einem ozonhaltigen Gas behandelt werden soll, da bereits bei der Ozonerzeugung vergleichsweise hohe Energie aufgebracht werden muss, und unverbrauchtes Ozon nur unter erschwerten Bedingungen rekuperiert werden kann.

Bei den bekannten Vorrichtungen zur Begasung von Flüssigkeiten mit Ozon werden im wesentlichen folgende Verfahren angewandt:
- Einblasen von ozonhaltigem Gas mit einer Spezialturbine
- Einblasen von ozonhaltigem Gas durch poröse Rohre oder Körper
- Einblasen von ozonhaltigem Gas mit einem Injektor

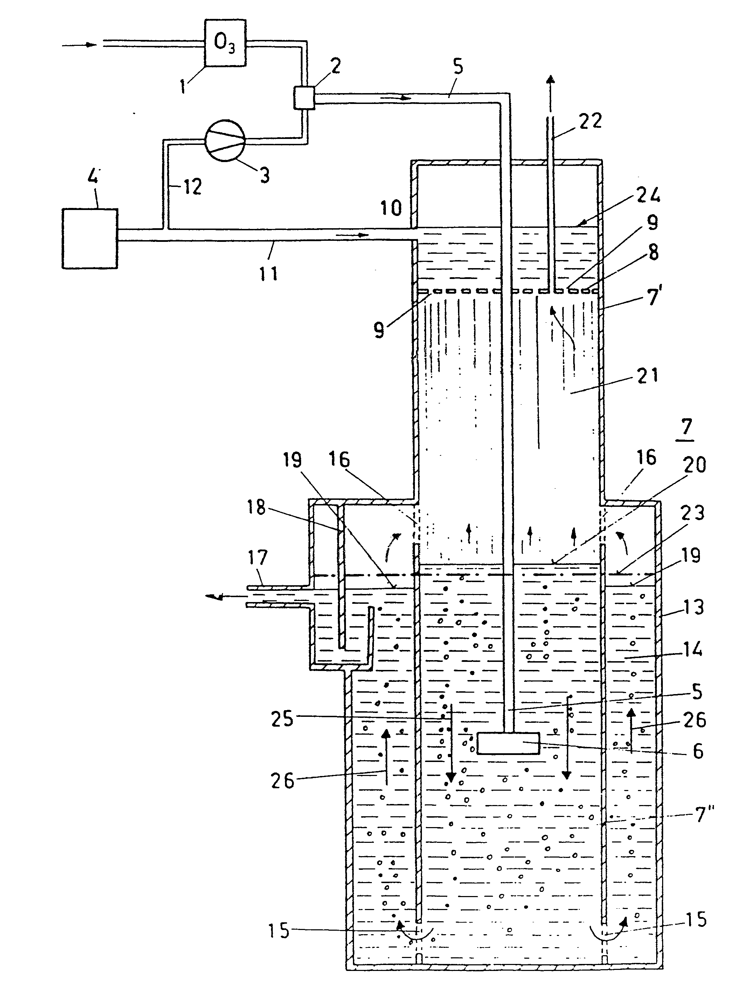

Beim erstgenannten Verfahren wird das zu behandelnde Wasser in die Saugzone einer Turbine mit Sonderprofil eingegeben, die es hinunterdrückt gegen einen Strom ozonisierter Luft, der unterhalb der Turbine eingeblasen wird. Im turbinennahen Bereich der Blasensäule breitet sich eine feine Dispersionszone (ozonisierte Luft-Wasser) aus, welche wieder durch die Turbine getrieben wird, deren Durchsatz ein vielfaches der aufzubereitenden Wassermenge ist. Nach dieser Mischung steigt die Luft-Wasser-Emulsion in einer zweiten Einheit auf, wo sich der Kontakt fortsetzt. Auf diese Weise lassen sich Blasenlebensdauern von mehr als einer Minute realisieren (vgl. Degrémont Handbuch «Wasseraufbereitung und Abwasserreinigung», Bauverlag GmbH Wiesbaden und Berlin, 1974, Seite 243, Abb. 167).

Beim zweiten Verfahren werden im unteren Teil einer Blasensäule poröse Rohre angebracht, durch die ozonisierte Luft in kleinsten Blasen ausströmt. Das zu ozonisierende Wasser fliesst im Oberteil der Blasensäule ein. Hiermit wird ein inniger Kontakt im Gegenstrom der beiden Medien erreicht. Die Blasensäulen können auch mit mehreren Einheiten ausgeführt werden, wobei Teilinjektionen mit ozonisierter Luft ebenfalls vorzugsweise im Gegenstrom vorgenommen werden. Die Verweilzeit der Blasen und damit der Absorptionswirkungsgrad liegt hier jedoch weit unter demjenigen des Turbinen-Mischverfahrens (a.a.O. S. 243, Abb. 166).

Beim dritten Verfahren – Einblasen der ozonisierten Luft mit einem Injektor – sind zwei Alternativen zu unterscheiden:

Verfügt man über einen Wasserdruck von mindestens 2 m Wassersäule, so kann mit diesem Druck eine Strahlpumpe betrieben werden, durch die die gesamte aufzubereitende Wassermenge fliesst. Dabei saugt die Strahlpumpe die ozonisierte Luft an und speist die Blasensäule von unten her (a.a.O.S. 244, Abb. 168).

Liegt der vorhandene Druck unter 2 m Wassersäule, dann wird die Menge von zu behandelndem Wasser in zwei ungleiche Teile geteilt. Der Druck des kleineren Teils wird mit einer Pumpe erhöht, damit die Strahlpumpe für ozonisierte Luft betrieben werden kann. Der restliche nicht ozonisierte Durchsatz wird mit natürlichem Gefälle in den unteren Teil der Blasensäule geführt. Die Wirksamkeit dieser Methode lässt zu wünschen übrig, weil beide Teile Wasser einer unterschiedlichen Behandlung unterzogen werden und dadurch die Ozonverteilung nicht homogen ist.

Aus der FR-A 642 874 ist ferner eine Vorrichtung zur Begasung von Wasser mit einem ozonhaltigen Gas bekannt, bei welcher in einer Art Wasserstrahlpumpe frisches Gas mit Flüssigkeit gemischt wird. Dieser Mischvorrichtung ist eine Reaktionskammer nachgeschaltet, aus welcher das überschüssige Einsatzgas nach obenhin entweichen kann. Dieses Gas wird in den Innenraum eines Filters geleitet, dem die zu filtrierende und zu begasende Flüssigkeit fein zerstäubt zugeführt wird.

Ausgehend vom Bekannten, insbesondere vom Stand der Technik nach der IFR-A 642 874 und der DE-A 2 507 698, liegt der Erfindung, wie sie in den Patentansprüchen gekennzeichnet ist, die Aufgabe zugrunde, eine Vorrichtung zur Begasung von Flüssigkeiten zu schaffen, welche neben einem wirtschaftlichen Aufbau und hoher Betriebssicherheit einen hohen Absorptionswirkungsgrad aufweist und darüber hinaus keine nennenswerten Wirkungsgradeinbussen bei variierendem Durchsatz hat.

Gegenstand der Erfindung ist ferner die Angabe eines Verfahrens zum optimalen Betrieb der erfindungsgemässen Vorrichtung.

Der Erfindung liegen dabei die folgenden Erkenntnisse zugrunde: Der hinsichtlich Absorptionswirkungsgrad günstige Stoffaustausch im Gegenstrom ist in grosstechnischen Anlagen nicht realisierbar. Praktisch muss immer mit einem Mischsystem oder einem Austausch im Gleichstrom gerechnet werden, bei welchem der Absorptionswirkungsgrad durch das Gleichgewicht des Ozons in den beiden Phasen begrenzt wird. Dieser theoretische Wirkungsgrad bei Gleichgewicht ist ausser vom Teilungskoeffizient auch vom Volumenstromverhältnis Gas/Flüssigkeit abhängig. Bei der erfindungsgemässen Vorrichtung wird zumindest die zweite Begasungsstufe im Gegenstrom betrieben, wobei teilweise «verbrauchtes» Prozessgas mit «frischer» Flüssigkeit in Kontakt gebracht wird, was zu einer wesentlichen Verbesserung des Gesamt-Absorptionswirkungsgrades führt. Darüber hinaus gleichen sich z.B. durch unterschiedlichen Durchsatz hervorgerufene Wirkungsgradänderungen in einzelnen Begasungsstufen weitgehend selbsttätig aus.

Bei vollem Wasserstrom ist die Strömungsgeschwindigkeit der Flüssigkeit derart gross, dass die Gasblasen nach unten mitgerissen werden. Man spricht in diesem Zusammenhang von einem Blasensäulen-Abströmreaktor mit dem bekannten hohen Austauscheffekt. Nachteilig ist beim üblichen Abstromreaktor, dass die Blasensäule bei reduziertem Wasserstrom infolge der aufsteigenden Gasblasen nur noch konventionell wirkt. Bei der Erfindung hingegen wird durch die vom Rieselboden herabfallenden Wassertropfen das Gas in die Flüssigkeit eingeschlagen. Dadurch bildet sich eine «kochende Zone» hoher Turbulenz, bestehend aus Wasser mit hohem Gasanteil, durch welche die aufsteigenden Gasblasen passieren müssen.

Bei genügend hohem Wasserstrom werden praktisch alle Gasblasen nach unten mitgerissen und passieren nach Umlenkung am Boden die zweite Kammer. Beide Kammern wirken demgemäss als Abstromreaktoren mit einer sehr grossen aktiven Länge. Das die zweite Kammer verlassende unverbrauchte Einsatzgas wird nun in die erwähnte kochende Zone zurückgeführt.

Infolge des Dichteunterschiedes der Wasser/Gasgemische in den beiden Kammern ergibt sich eine Niveaudifferenz in den genannten Kammern. Durch die erfindungsgemässe Anordnung der oberen Verbindungen beider Kammern erreicht man nun, dass in jedem Betriebszustand – also auch bei geringem Wasserstrom – der gesamte noch nicht verbrauchte Gasstrom durch die «kochende Zone» mit ihrem hohen Austauscheffekt geleitet wird.

Wird weiterhin die Strömungsgeschwindigkeit der Flüssigkeit in der Blasensäule annähernd so gross eingestellt wie die Steiggeschwindigkeit der Prozessgasblasen (Anspruch 7), so wird durch die in der Blasensäule schwebenden oder schwimmenden Blasen ein extrem hoher, bis 50 Vol.-% betragender Gasanteil in der Blasensäule erreicht. Mit der entsprechend grossen Stoffaustauschfläche reduziert sich das Bauvolumen in erheblichem Masse. Dies ist gerade für den bevorzugten Verwendungszweck der Erfindung, die Ozonisierung von Wasser bedeutsam, da dort grosse Mengen Wasser behandelt werden müssen und die Gestehungskosten für Ozon auch heute noch sehr hoch sind.

Die Weiterbildung gemäss Anspruch 2 stellt eine konstruktiv einfache Lösung der Anordnung beider Kammern dar, die die koaxiale Anordnung von erster und zweiter Begasungsstufe ermöglicht.

Als Tauchbegaser können praktisch alle zum Stand der Technik zu zählenden Mischeinrichtungen Verwendung finden, insbesondere sog. Radialbegaser, wie sie in dem Aufsatz «Versuche über die Ozonisierung von Wasser mit neuartigem Radialbegaser», erschienen in «Gesundheitstechnik (Z.G. Umweltschutz)» Nr. 10/Oktober 1973, beschrieben sind. Besonders vorteilhaft sind aber auch sogenannte statische Mischer oder Zweistoffdüsen, wie sie beispielsweise in der CH-A 564 966 beschrieben sind und dort als Spiralmischer bezeichnet sind. Die Spiralmischer beruhen auf der Anwendung einer rohrförmigen Vorrichtung, in welcher die zu vermischenden Medien in einem Spiralstrom fliessen und zusätzlichen Schwerkräften ausgesetzt werden. Im vorliegenden Anwendungsfall werden jedoch – im Gegensatz zum Bekannten – nicht das Prozessgas und die gesamte Menge der zu behandelnden Flüssigkeit durch den Tauchbegaser geleitet, sondern es wird dem Tauchbegaser nur ein Bruchteil der zu behandelnden Flüssigkeit und das gesamte Prozessgas zugeführt. Aus energetischen Gründen liegt dieser Anteil bei der Ozonisierung von Wasser höchstens etwa bei 15%, während die restliche Flüssigkeitsmenge der zweiten Begasungsstufe zugeführt wird. Damit bleibt die aufzuwendende Pumpenleistung bescheiden.

Die Erfindung wird nachstehend anhand eines in der Zeichnung dargestellten Ausführungsbeispiels näher erläutert.

Die Zeichnung zeigt in stark schematisierter Darstellung eine Vorrichtung zur Ozonisierung von Wasser. Sauerstoff oder ein sauerstoffhaltiges Gas wird einem Ozonisator 1 zugeführt und dort mit Ozon angereichert. Das unter einem Überdruck stehende, den Ozonisator verlassende Prozessgas wird dem einen Eingang des Zumischers 2 zugeführt. Der andere Eingang des Zumischers 2 ist mit dem Ausgang einer Pumpe 3 verbunden, die aus einem Speicher 4 gespeist wird. Eine Leitung 5 führt das Prozessgas und das Wasser zu einem Tauchbegaser 6, der als statischer Mischer ausgebildet ist. Der Tauchbegaser ragt in den Behälterunterteil 7″ eines zylindrischen Behälters 7. Dieser Behälter weist eine gleichfalls zylindrische und z.B. einstückig mit diesem verbundene obere Fortsetzung, den Behälteroberteil 7', auf, in dem ein Rieselboden 8 angeordnet ist. Der Rieselboden 8 besteht im wesentlichen aus einer den gesamten Querschnitt des oberen Behälterteils 7' einnehmenden, senkrecht zur Behälterachse verlaufenden Platte mit einer Vielzahl von Durchgangsbohrungen 9. Der Raum oberhalb des Rieselbodens 8 ist über eine Leitung 11 an den Speicher 4 angeschlossen. Die Leitungsquerschnitte der Leitung 11 vom Speicher 4 zum Behälter 7, der Verbindungsleitung 12 zwischen Speicher 4 und Pumpe 3, das Gefälle Speicher 4/Behälteroberteil 7' und der Rieselboden sind so bemessen, dass etwa 90% des dem Behälter gesamthaft zugeführten Wassers durch die Leitung 11, die restliche Wassermenge durch die Pumpe 3 und die Leitung 5 strömt.

Der Behälterunterteil 7'' ist von einem Aussenbehälter 13 konzentrisch umgeben. Der Ringraum 14 zwischen Innen- und Aussenbehälter steht sowohl im behälterbodenseitigen Ende über grossflächige Öffnungen 15 als auch im rieselbodenseitigen Ende über Durchbrüche 16 mit dem Inneren des Behälters 7 in freier Verbindung. Der Behälterunterteil 7'' und der genannte Ringraum 14 bilden die zwei Kammern der Blasensäule. Das behandelte Wasser verlässt den Ringraum 14 über einen Abfluss 17 am oberen Ende des Aussenbehälters, der mit einer Schikane 18 versehen ist. Das Niveau 19 des abfliessenden (behandelten) Wassers ist tiefer als das Niveau 20 des Wassers im Inneren des Behälterunterteils 7'', das wiederum tiefer liegt als die Durchbrüche 16 in der Wandung des Behälterunterteils 7''. Der Raum 21 zwischen dem Behälterunterteil 7'' und dem Rieselboden bildet die zweite Begasungsstufe. Das Restgas wird über eine Leitung 22, die in den Rieselboden 8 mündet, unterhalb des Rieselbodens aus dieser zweiten Begasungsstufe abgeleitet.

Die Wirkungsweise der soeben beschriebenen Vorrichtung zur Ozonisierung von Wasser geht aus folgendem hervor, wobei ein bereits im Wasser bis zum statischen Niveau 23 gefüllter Behälter vorausgesetzt wird. Das mit Ozon angereicherte Gasgemisch wird im Mischer 2 mit dem Wasserleitstrom hinter der Pumpe 3 vereinigt. Im Tauchbegaser 6 erfolgt eine nochmalige intensive Vermischung von Wasser und Prozessgas, wobei die Gasmenge in eine Vielzahl kleiner und kleinster Gasblasen zerteilt wird. Diese Gasblasen verteilen sich in der inneren Kammer des Behälterunterteils 7''. Wird gleichzeitig dem Raum oberhalb des Rieselbodens 8 Wasser zugeführt, so tritt dieses fein verteilt durch die Bohrungen 9 im Rieselboden, gelangt im freien Fall in die innere Kammer. Auf dem Wege dahin tritt das Wasser in Kontakt mit aus der ersten Begasungsstufe austretenden, an Ozon bereits verarmten Prozessgas. Das herabrieselnde Wasser wird somit bereits vor dem Eintritt in die erste Begasungsstufe mit Ozon angereichert. Infolge der zugeführten Wassermenge steigt das Niveau in der inneren Kammer an, so dass sich nach kurzer Zeit stationäre Flüssigkeitsniveaus 19, 20 in der ersten Begasungsstufe einstellen. Analog wird sich auch oberhalb des Rieselbodens 8 (Zuflussraum) ein stationäres Niveau 24 einstellen.

Infolge des Zulaufs bildet sich (bei offenem Abfluss) eine Flüssigkeitsströmung in der inneren Kammer – symbolisiert durch die Pfeile 25 – von oben nach unten und im Ringraum 14 – symbolisiert durch die Pfeile 26 – eine solche von unten nach oben. Je nach Grösse der gesamthaft zugeführten Wassermenge stellt sich auch im Behälterinneren eine bestimmte mittlere Strömungsgeschwindigkeit des Wassers ein. Je nach Grösse der Gasblasen und dieser Strömungsgeschwindigkeit werden diese entweder mitgerissen, verharren im Schwebezustand, schwimmen mit einer im Vergleich zur «statischen» Steigegeschwindigkeit geringeren Geschwindigkeit auf, also entgegen der Strömungsrichtung des Wassers. Selbst im «ungünstigsten» Fall, wo die Gasbläsen von der Strömung mitgerissen werden, verbleibt eine genügend grosse Verweilzeit der Gasblasen im Wasser auf dem Wege zum Behälterboden und von dort aus durch die Öffnungen 15 in den Ringraum 14. Aus der Flüssigkeit im Ringraum 14 entweichendes Prozessgas tritt durch die Durchbrüche 16 in die zweite Begasungsstufe und tritt mit dem herabrieselnden Wasser in Wechselwirkung. Aus diesen Ausführungen erhellt, dass der Gesamtabsorptionswirkungsgrad nur wenig vom Durchsatz abhängig ist, da bei abnehmendem Wirkungsgrad in der einen Stufe derjenige der anderen Begasungsstufe zwangsläufig ansteigt.

Ohne den durch die Patentansprüche gesetzten Rahmen zu verlassen, sind vielfältige Abwandlungen und Ausführungsformen der Erfindung möglich.

So kann an die Stelle des statischen Mischers ein Radialbegaser oder ein Injektor bekannter Bauart treten. Die im Zusammenhang mit dem Stand der Technik geschilderten Nachteile der Ausführungsform nach «Degrémont-Handbuch» dort S. 244, Abs. 168, zweite Alternative, treten dabei nicht auf, da schon die besondere Bauart der ersten Begasungsstufe und ihre Flüssigkeitsführung eine homogene Begasung ermöglicht, welche durch die Wirkung der zweiten Stufe noch verstärkt wird.

Auch eine Ausführungsform ohne vorgängige Vermischung eines Teils des zu behandelnden Wassers mit dem Prozessgas hat sich als vorteilhaft erwiesen. Hierbei wird nur das Prozessgas z.B. durch in der ersten Begasungsstufe angeordnete poröse Rohre geleitet oder das Prozessgas wird getrennt von der (kleineren) Flüssigkeitsteilmenge dem Tauchbegaser, der dann als Zweistoffdüse ausgebildet ist, zugeführt. Alle anderen Mechanismen und Reaktionen spielen sich in gleicher Weise ab. Insbesondere bei modernen Ozonerzeugern, bei denen das mit Ozon angereicherte Gas unter Überdruck den Ozonerzeuger verlässt und direkt in einen herkömmlichen Tauchbegaser geleitet wird, sind dann besondere Druckerzeuger entbehrlich.

Es liegt selbstverständlich auch im Rahmen der Erfindung, den Tauchbegaser als sogenannten Turbinenmischer auszubilden und anstelle des statischen Mischers in der ersten Begasungsstufe einzusetzen.

Die Erfindung wurde anhand eines Ausführungsbeispiels zur Ozonisierung von Wasser beschrieben. Selbstverständlich eignet sich die Vorrichtung auch für andere verfahrenstechnische Anwendungen, wo ein Gas oder Gasgemisch mit einer Flüssigkeit in Kontakt gebracht werden soll.

**Patentansprüche**

1. Vorrichtung zur Begasung einer Flüssigkeit mit Ozon oder einem ozonhaltigen Gas, umfassend eine erste Begasungsstufe (7″, 14), in welcher das Prozessgas mit der zu begasenden Flüssigkeit in Kontakt gebracht wird, eine zweite Begasungsstufe (8, 21), in welcher das aus der ersten Begasungsstufe entweichende Prozessgas mit der der ersten Begasungsstufe zugeführten Flüssigkeit in Kontakt gebracht wird, wobei dadurch gekennzeichnet, dass die erste Begasungsstufe als Blasensäule ausgebildet ist, in welche ein Tauchbegaser (6) hineinreicht – die zweite Begasungsstufe (8, 21) als oberhalb der Blasensäule (7″) angeordneter und von dieser räumlich distanzierter Rieselboden (8) ausgebildet ist, der mit der zu begasenden Flüssigkeit beschickt wird, dass die Blasensäule zwei Kammern 7″, 14) aufweist, deren eine sich unmittelbar an den Raum unterhalb des Rieselbodens (8) anschliesst, in welcher Kammer auch der Tauchbegaser (6) angeordnet ist, dass die eine Kammer (7″) mit der anderen Kammer (14) eine unterhalb des Tauchbegasers (6) angeordnete freie Verbindung (15) aufweist und die andere Kammer (14) in ihrem oberen Bereich zum Raum (21) unterhalb des Rieselbodens (8) geöffnet ist, wobei diese Verbindung oberhalb des Flüssigkeitsniveaus (20) der ersten Kammer (7″) verläuft.

2. Vorrichtung nach Anspruch 1, dadurch gekennzeichnet, dass die zweite Kammer (14) die erste Kammer (7″) umgibt und im bodennahen Bereich mit dieser über Öffnungen (15) in freier Verbindung steht.

3. Vorrichtung nach Anspruch 1 oder 2, dadurch gekennzeichnet, dass die zweite Kammer einen Abfluss (17) aufweist, der unterhalb des regulären Flüssigkeitsniveaus (20) der ersten Kammer (7″) liegt und mit einer Schikane (18) versehen ist.

4. Vorrichtung nach einem der Ansprüche 1 bis 3, dadurch gekennzeichnet, dass der Tauchbegaser (6) als statischer Mischer ausgebildet ist, dem sowohl das Prozessgas als auch ein Teil der zu begasenden Flüssigkeit zugeführt wird.

5. Vorrichtung nach einem der Ansprüche 1 bis 3, dadurch gekennzeichnet, dass der Tauchbegaser als Rührwerksmischer oder Röhrenmischer ausgebildet ist, dem das Prozessgas direkt zugeführt wird.

6. Vorrichtung nach Anspruch 4, dadurch gekennzeichnet, dass zur Ozonisierung von Wasser die Vorrichtung derart ausgebildet ist, dass höchstens 15% der zu ozonisierenden Flüssigkeit mit dem ozonhaltigen Gas vereinigt und über den statischen Mischer in die Blasensäule (7″, 14) einleitbar ist und die restliche Wassermenge der zweiten Begasungsstufe (7′) direkt zuführbar ist.

7. Verfahren zum Betrieb der Vorrichtung nach Anspruch 1, dadurch gekennzeichnet, dass die Strömungsgeschwindigkeit der Flüssigkeit in der ersten Begasungsstufe (7″) dem Betrage nach annähernd der Steiggeschwindigkeit der Gasblasen in dieser Stufe entspricht.

8. Verfahren zum Betrieb der Vorrichtung nach Anspruch 6, dadurch gekennzeichnet, dass der Blasensäule (7″) mindestens 85% der zu begasenden Flüssigkeit direkt, die restliche Menge durch den Tauchbegaser zugeführt wird.

9. Verfahren nach Anspruch 8, dadurch gekennzeichnet, dass die dem Tauchbegaser (6) zugeführte Flüssigkeit unter Zuhilfenahme einer Pumpe (3) auf einen Druck gebracht wird, der demjenigen entspricht, den das Prozessgas beim Austritt aus dem Ozonisator (1) aufweist, und die Vereinigung nach der Pumpe erfolgt.

**Claims**

1. Equipment for gassing a liquid with ozone or an ozonecontaining gas, comprising a first gassing stage (7″, 14) in which the process gas is contacted with the liquid to be gassed, and a second gassing stage (8, 21) in which the process gas escaping from the first gassing stage is contacted with the liquid fed to the first gassing stage, and the first gassing stage is designed as a bubble column into which a submerged gas inlet (6) reaches down, characterised in that the second gassing stage (8, 21) is designed as a drip tray (8) which is arranged above the bubble column (7″) and at a spatial distance from the latter and to which the liquid to be gassed is charged, that the bubble column has two chambers (7″, 14), one of which immediately adjoins the space below the drip tray (8) and in which chamber also the submerged gas inlet (6) is located, that one chamber (7″) has a free connection (15), located underneath the submerged gas inlet (6), to the other chamber (14) and the upper region of the other chamber (14) is open towards the space (21) underneath the drip tray (8), this connection being above the liquid level (20) of the first chamber (7″).

2. Equipment according to Claim 1, characterised in that the second chamber (14) surrounds the first chamber (7″) and has a free connection to the latter via openings (15) in the region close to the bottom.

3. Equipment according to Claim 1 or 2, characterised in that the second chamber has an outflow (17) which is located below the regular liquid level (20) of the first chamber (7″) and is provided with a baffle (18).

4. Equipment according to one of Claims 1 to 3, characterised in that the submerged gas inlet (6) is designed as a static mixer which is fed with both the process gas and a part of the liquid to be gassed.

5. Equipment according to one of Claims 1 to 3, characterised in that the submerged gas inlet is designed as an agitator mixer or tubular mixer which is fed directly with the process gas.

6. Equipment according to Claim 4, characterised in that, for the ozonisation of water, the equipment is designed in such a way that at most 15% of the liquid to be ozonised is combined with the ozone-containing gas, and can be introduced via the static mixer into the bubble column (7", 14) and the remaining quantity of water can be fed directly to the second gassing stage (7').

7. Process for operating the equipment according to Claim 1, characterised in that the flow velocity of the liquid in the first gassing stage (7") numerically corresponds approximately to the rate of rise of the gas bubbles in this stage.

8. Process for operating the equipment according to Claim 6, characterised in that at least 85% of the liquid to be gassed is fed directly to the bubble column (7") and the remaining quantity is fed through the submerged gas inlet.

9. Process according to Claim 8, characterised in that the liquid fed to the submerged gas inlet (6) is brought by means of a pump (3) to a pressure which corresponds to that of the process gas leaving the ozoniser (1), and the liquid and the gas are combined downstream of the pump.

**Revendications**

1. Appareil pour le traitement d'un fluide à l'aide d'un gaz avec de l'ozone, ou un gaz contenant de l'ozone, qui comprend une première étape de traitement au gaz (7", 14) dans laquelle on met en contact le gaz de traitment avec le fluide à traiter au gaz, une deuxième étape de traitement au gaz (8, 21), dans laquelle on met en contact le gaz de traitement qui se dégage de la première étape de traitement au gaz avec le fluide qui provient de la première étape de traitement au gaz, et la première étape de traitement au gaz est conçue sous la forme d'une colonne de soufflage, dans laquelle s'étend un souffleur immergé (6), caractérisé en ce que la deuxième étape de traitement au gaz (8, 21) est conçue comme un plateau d'égouttage (8), disposé au-dessus de la colonne de soufflage (7") et disposé à une certaine distance de celle-ci, et que l'on charge du fluide à traiter au gaz, en ce que la colonne de soufflage comporte deux chambres (7", 14) dont l'une communique directement avec l'espace en-dessous du plateau d'égouttage (8), chambre dans laquelle le souffleur immergé (6) est aussi disposé, en ce que la première chambre (7") contient une connection libre (15) située en-dessous du souffleur immergé (6) vers l'autre chambre (14) et la partie supérieure de l'autre chambre (14) est ouverte vers l'espace (21) sous le plateau d'égouttage (8), ce par quoi cette connection passe au de-dessus du niveau du fluide (20) de la première chambre (7").

2. Appareil selon la revendication 1, charactérisé en ce que le deuxième chambre (14) entoure la première chambre (7") et a une connection libre avec cette dernière par des orifices (15) dans la région proche du fond.

3. Appareil selon la revendication 1 ou 2, caractérisé en ce que la deuxième chambre comprend un déversoir (17) qui se trouve au-dessous du niveau normal du fluide (20) de la première chambre (7") et qui est pourvu d'une chicane (18).

4. Appareil selon l'une quelconque des revendications 1 à 3, caractérisé en ce que le souffleur immergé (6) est conçu comme un mélangeur statique, auquel sont apportés aussi bien le gaz de traitement qu'une partie du fluide à traiter au gaz.

5. Appareil selon l'une quelconque des revendications 1 à 3, caractérisé en ce que le souffleur immergé est conçu comme un mélangeur malaxeur ou comme un mélangeur tubulaire, auquel le gaz de traitement est amené directement.

6. Appareil selon la revendication 4, caractérisé en ce que le dispositif est conçu de façon à effectuer l'ozonisation de l'eau, de façon à ce qu'un maximum de 15% du fluide à ozoniser est mélangé au gaz contenant de l'ozone et peut être amené par le mélangeur statique dans la colonne de soufflage (7", 14) et en ce que la masse d'eau résiduelle peut être amenée directement à la deuxième étape de traitement au gaz (7').

7. Procédé pour la mise en oeuvre du dispositif selon la revendication 1, caractérisé en ce que la vitesse de circulation du fluide dans la première étape de traitement au gaz (7") correspond approximativement à l'amplitude de la vitesse de montée des bulles de gaz dans cette étape.

8. Procédé pour la mise en oeuvre du dispositif selon la revendication 6, caractérisé en ce que l'on amène directement à la colonne de soufflage (7") au moins 85% du fluide à traiter au gaz, et la masse résiduelle est amenée par l'intermédiaire du souffleur immergé.

9. Procédé selon la revendication 8, caractérisé en ce que l'on amène le fluide amené au souffleur immergé (6) au moyen d'une pompe (3) à une pression qui correspond à celle du gaz de traitement à la sortie de l'ozonisateur (1), et en ce que le liquide et le gaz sont combinés en aval de la pompe.